# EUROPÄISCHE PATENTSCHRIFT

(11) **EP 1 352 164 B1**
(45) Veröffentlichungstag und Bekanntmachung des Hinweises auf die Patenterteilung: **19.09.2007**
(21) Anmeldenummer: 01984690.6
(22) Anmeldetag: 11.12.2001
(51) Int. Cl.: F02D 41/06, F02D 41/38

(54) **VERFAHREN UND VORRICHTUNG ZUR STEUERUNG EINE BRENNKRAFTMASCHINE**
METHODS AND DEVICE FOR CONTROLLING AN INTERNAL COMBUSTION ENGINE
PROCEDES ET DISPOSITIF DE COMMANDE D'UN MOTEUR A COMBUSTION INTERNE

(30) Priorität: 22.12.2000 DE 10064653
(43) Veröffentlichungstag der Anmeldung: 15.10.2003
(73) Patentinhaber: ROBERT BOSCH GMBH, 70442 Stuttgart (DE)
(72) Erfinder: GRASS, Gerd, 71701 Schwieberdingen (DE); WEISS, Ruediger, 71159 Moetzingen (DE); AMLER, Markus, 71229 Leonberg-Gebersheim (DE); BOCHUM, Hansjoerg, Novi, MI 48377 (US)
(86) Internationale Anmeldenummer: PCT/DE2001/004659
(87) Internationale Veröffentlichungsnummer: WO 2002/052139

(56) Entgegenhaltungen:
- DE-A- 4 039 598
- DE-A- 19 547 644
- US-A- 4 951 633
- PATENT ABSTRACTS OF JAPAN vol. 1996, no. 11, 29. November 1996 (1996-11-29) & JP 08 177590 A (NIPPONDENSO CO LTD), 9. Juli 1996 (1996-07-09)

## Beschreibung

### Stand der Technik

Die Erfindung betrifft ein Verfahren zur Bestimmung einer eine Einspritzmenge charakterisierenden Größe bei einer Brennkraftmaschine eines Kraftfahrzeuges in einer Heißstartsituation sowie ein Verfahren zum Bestimmen einer Heißstartsituation bei einer Brennkraftmaschine eines Kraftfahrzeugs. Die Erfindung betrifft ebenfalls entsprechende Vorrichtungen, ein entsprechendes Steuergerät für eine Brennkraftmaschine, ein entsprechendes Computerprogramm mit Programmcode-Mitteln und ein entsprechendes Computerprogrammprodukt mit Programmcode-Mitteln.

### Stand der Technik

Generell wird dann von einer Heißstartsituation gesprochen, wenn z.B. nach einer kurzen Betriebspause der erneute Start bei einer noch heißen Brennkraftmaschine erfolgt. Bei ruhender heißer Maschine bilden sich Kraftstoffdampfblasen in den Kraftstoffleitungen sowie auch im Einspritzventil selbst. Bei einem nachfolgenden Startvorgang behindern diese Kraftstoffdampfblasen dann die reguläre Kraftstoffzumessung.

Deshalb wird unter Heißstartbedingungen beispielsweise ein verlängertes Einspritzsignal ausgegeben, damit auch beim Auftreten von Kraftstoffdampfblasen eine gewisse Mindestmenge an Kraftstoff dem Verbrennungsprozeß zur Verfügung gestellt werden kann.

Die DE 40 39 598 A1 offenbart ein Heißstartverfahren und eine Heißstartvorrichtung für eine Brennkraftmaschine. Eine Heißstartsituation wird bei der dort angegebenen Lehre dann angenommen, wenn sowohl die Motortemperatur als auch die Ansauglufttemperatur bestimmte Schwellenwerte übersteigen und darüber hinaus die betragsmäßige Differenz zwischen der Ansauglufttemperatur zu einem früheren Zeitpunkt und der Ansauglufttemperatur bei einem neuen Start oberhalb einer wählbaren Schwelle liegen.

Die DE 44 35 419 A1 offenbart ein Steuersystem für die Kraftstoffzumessung einer Brennkraftmaschine. Hierbei wird eine Heißstartsituation angenommen und ein entsprechendes Heißstart-Bit gesetzt, wenn die Brennkraftmaschinentemperatur einen ersten Schwellenwert überschreitet und ergänzend ein Anstieg der Ansauglufttemperatur um einen bestimmten Betrag seit einer letzten Messung stattgefunden hat. Dabei kann der letzte Wert derjenige sein, der zum Zeitpunkt des Abstellens der Brennkraftmaschine herrschte und der neue Wert kann zum Zeitpunkt des Einschaltens der Zündung oder des Anlassers gewonnen werden. Das Heißstart-Bit bleibt solange gesetzt, bis die Brennkraftmaschinentemperatur einen zweiten Schwellenwert unterschreitet oder bis eine vorbestimmte Gesamtluftmasse das Ansaugrohr durchströmt hat. Die zuletzt genannte Gesamtluftmasse wird hierbei mittels einer Integration des Signals eines Luftmassensensors im Ansaugrohr bestimmt.

Aus der DE 195 47 644 A1 ist ein Verfahren und eine Vorrichtung zur Steuerung der Kraftstoffzumessung in einer Brennkraftmaschine bekannt, bei der die einzuspritzende Kraftstoffmenge in Abhängigkeit von der Temperatur, der Dichte und dem Druck des Kraftstoffs korrigiert wird. Das Verfahren nach der DE 195 47 644 A1 wird vorzugsweise bei selbstzündenden Brennkraftmaschinen eingesetzt, die mit einem Common-Rail-System ausgestattet sind.

Insbesondere bei modernen Kraftstoffeinspritzsystemen, die mit einer Hochdruckkraftstoffeinspritzung arbeiten erhitzen sich einige Komponenten, wie beispielsweise die Hochdruckpumpe, auch noch nach Abstellen des Motors, wodurch gegenüber der Abstelltemperatur erhöhte Temperaturwerte auftreten können. Von besonderer Bedeutung ist bei einer anschließenden Heißstartsituation die richtige Zumessung von Kraftstoff, damit ein sicherer und zuverlässiger Start gewährleistet ist. Ein wesentlicher Aspekt hierbei ist auch die Heißstarterkennung selbst.

### Aufgabe der Erfindung

Der Erfindung liegt die Aufgabe zugrunde, die Bestimmung einer eine Einspritzmenge charakterisierenden Größe bei einer Brennkraftmaschine eines Kraftfahrzeuges in einer Heißstartsituation sowie das Bestimmen einer Heißstartsituation bei einer Brennkraftmaschine eines Kraftfahrzeugs zu verbessern. Diese Aufgabe wird durch die in den unabhängigen Ansprüchen gekennzeichneten Merkmale gelöst.

### Vorteile der Erfindung

Die Aufgabe wird zum einen durch ein Verfahren zur Bestimmung einer eine Einspritzmenge charakterisierenden Größe bei einer Brennkraftmaschine eines Kraftfahrzeuges in einer Heißstartsituation gelöst, wobei Kraftstoff aus einem Hochdruckbereich des Kraftstoffversorgungssystems direkt in wenigstens einen Brennraum eingespritzt wird, wobei die die Einspritzmenge charakterisierende Größe in der Heißstartsituation korrigiert wird, wobei die die Einspritzmenge charakterisierende Größe wenigstens in Abhängigkeit von einer eine Temperatur des Kraftstoffs repräsentierenden Größe korrigiert wird.

Hierdurch wird in vorteilhafter Weise bei Kraftstoffversorgungssystemen mit Hochdruckeinspritzung die Temperatur des Kraftstoffs bei der Zumessung des Kraftstoffs berücksichtigt, was zu einem verbesserten Start- und Brennverhalten in Heißstartsituationen führt.

Erfindungsgemäße Weiterbildungen sehen vor, dass die die Einspritzmenge charakterisierende Größe eine Einspritzdauer ist, dass die die Temperatur des Kraftstoffs repräsentierende Größe eine Motor- oder Kühlmitteltemperatur ist und dass eine Heißstartsituation wenigstens anhand der die Temperatur des Kraftstoffs repräsentierenden Größe und anhand eines Kraftstoffdruckes bestimmt wird.

Durch diese erfindungsgemäßen Weiterbildungen wird in vorteilhafter Weise die Temperatur und der Druck des Kraftstoffes bei der Zumessung berücksichtigt, so dass bei einem Heißstart sichergestellt ist, dass die bestimmungsgemäße Kraftstoffmenge zugemessen wird. Dies führt zu einem besonders kultivierten Startverhalten der Brennkraftmaschine bei gleichzeitig verringerten Abgasemissionen. Besonders vorteilhaft wird der Kraftstoffdruck in dem Hochdruckbereich des Kraftstoffversorgungssystems bestimmt, wodurch der unmittelbar auf den einzuspritzenden Kraftstoff einwirkende Druck bei der Zumessung des Kraftstoffs berücksichtigt wird.

Eine bevorzugte Weiterbildung des Verfahrens sieht vor, dass eine Heißstartsituation erkannt wird, wenn eine Motortemperatur oder eine Kühlmitteltemperatur einen applizierbaren Temperaturschwellenwert überschreitet und der Kraftstoffdruck im Hochdruckbereich einen applizierbaren Druckschwellenwert unterschreitet.

Damit wird insbesondere bei Kraftstoffversorgungssystemen mit Hochdruckeinspritzung eine Heißstartsituation zuverlässig erkannt und die Kraftstoffmenge kann durch die Korrektur der Einspritzdauer entsprechend zugemessen werden.

Vorteilhaft läßt sich die Temperatur des Kraftstoffs entsprechend eines Modells und/oder eines applizierbaren Kennfelds aus der Motor- oder Kühlmitteltemperatur bestimmen. Weiterhin kann eine kritische Temperatur anhand des Kraftstoffdrucks in dem Hochdruckbereich des Kraftstoffversorgungssystems bestimmt und/oder aus einem applizierbaren Kennfeld entnommen werden. Mittels der bestimmten Kraftstofftemperatur und der kritischen Temperatur kann besonders vorteilhaft eine Heißstartsituation dadurch erkannt werden, dass die Temperatur des Kraftstoffs die kritische Temperatur überschreitet.

Die Aufgabe wird weiterhin durch ein Verfahren zum Bestimmen einer Heißstartsituation bei einer Brennkraftmaschine eines Kraftfahrzeugs gelöst, wobei eine Heißstartsituation wenigstens anhand einer eine Temperatur des Kraftstoffs repräsentierenden Größe und anhand eines Kraftstoffdruckes bestimmt wird. Durch diese Maßnahme kann eine Heißstartsituation bei Kraftfahrzeugen besonders einfach, schnell und zuverlässig bestimmt werden.

Die Aufgabe wird weiterhin durch eine Vorrichtung zur Bestimmung einer eine Einspritzmenge charakterisierenden Größe bei einer Brennkraftmaschine eines Kraftfahrzeuges in einer Heißstartsituation gelöst, wobei Kraftstoff aus einem Hochdruckbereich des Kraftstoffversorgungssystems direkt in wenigstens einen Brennraum eingespritzt wird, wobei die die Einspritzmenge charakterisierende Größe in der Heißstartsituation korrigiert wird, wobei Mittel vorhanden sind, mittels derer die die Einspritzmenge charakterisierende Größe wenigstens in Abhängigkeit von einer eine Temperatur des Kraftstoffs repräsentierenden Größe korrigierbar ist.

Die Aufgabe wird weiterhin durch eine Vorrichtung zur Bestimmung einer Heißstartsituation bei einer Brennkraftmaschine eines Kraftfahrzeugs gelöst, wobei Mittel vorhanden sind, mittels derer eine Heißstartsituation wenigstens anhand einer eine Temperatur des Kraftstoffs repräsentierenden Größe und anhand eines Kraftstoffdruckes bestimmbar ist.

Von besonderer Bedeutung ist die Realisierung der erfindungsgemäßen Verfahren in der Form eines Steuergerätes für eine Brennkraftmaschine, insbesondere eines Kraftfahrzeugs. Hierbei sind Mittel zur Durchführung der Schritte der zuvor beschriebenen Verfahren vorgesehen.

Von besonderer Bedeutung sind weiterhin die Realisierungen in Form eines Computerprogramms mit Programmcode-Mitteln und in Form eines Computerprogrammprodukts mit Programmcode-Mitteln. Das erfindungsgemäße Computerprogramm weist Programmcode-Mittel auf, um alle Schritte der erfindungsgemäßen Verfahren durchzuführen, wenn das Programm auf einem Computer, insbesondere einem Steuergerät für eine Brennkraftmaschine eines Kraftfahrzeugs, ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie die Verfahren, zu deren Ausführung das Programm geeignet ist. Das erfindungsgemäße Computerprogrammprodukt weist Programmcode-Mittel auf, die auf einem computerlesbaren Datenträger gespeichert sind, um die erfindungsgemäßen Verfahren durchzuführen, wenn das Programmprodukt auf einem Computer, insbesondere einem Steuergerät für eine Brennkraftmaschine eines Kraftfahrzeugs ausgeführt wird. In diesem Fall wird also die Erfindung durch einen Datenträger realisiert, so dass die erfindungsgemäßen Verfahren ausgeführt werden können, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher wie beispielsweise eine CD-ROM oder DVD.

Weitere Merkmale, Anwendungsmöglichkeiten und Vorteile der Erfindung ergeben sich aus der nachfolgenden Beschreibung von Ausführungsbeispielen der Erfindung, die in den nachfolgenden Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. ihrer Darstellung in der Zeichnung.

Beschreibung von Ausführungsbeispielen
Figur 1 zeigt eine erfindungsgemäße Vorrichtung bzw. eine erfindungsgemäße Vorrichtung und
Figur 2 zeigt ein erfindungsgemäßes Verfahren.

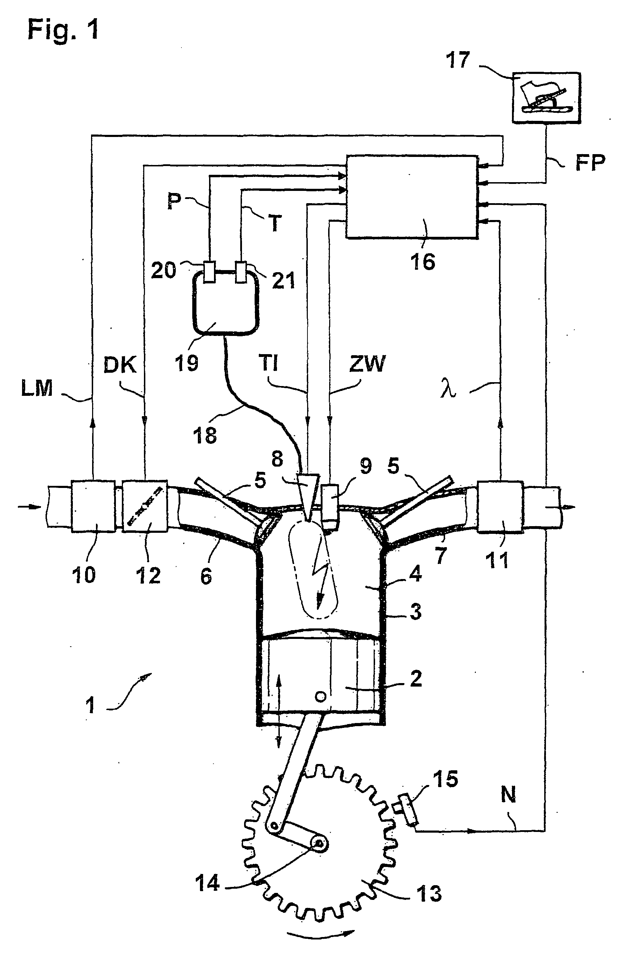

In der Figur 1 ist eine Brennkraftmaschine 1 dargestellt, bei der ein Kolben 2 in einem Zylinder 3 hin- und herbewegbar ist. Der Zylinder 3 ist mit einem Brennraum 4 versehen, an den über Ventile 5 ein Ansaugrohr 6 und ein Abgasrohr 7 angeschlossen sind. Des Weiteren sind mit dem Brennraum 4 ein mit einem Signal TI ansteuerbares Einspritzventil 8 und eine mit einem Signal ZW ansteuerbare Zündkerze 9 verbunden. Die Signale TI und ZW werden hierbei von einem Steuergerät 16 an das Einspritzventil 8 bzw. die Zündkerze 9 übertragen. Das Signal TI stellt das Einspritzsignal und das Signal ZW den Zündwinkel dar. Das Einspritzventil wird von einem Kraftstoff-Hochdruckspeicher 19, beispielsweise ein Common-Rail, über eine Hochdruck-Kraftstoffleitung 18 mit Kraftstoff versorgt. In dem Kraftstoff-Hochdruckspeicher 19 sind ein Drucksensor 20 und ein Temperatursensor 21 angeordnet, die ein Drucksignal P und ein Temperatursignal T an das Steuergerät 16 übermitteln. Eine Hochdruckpumpe, die den Kraftstoff aus einem Niederdruckbereich in den Hochdruckbereich des Kraftstoff-Hochdruckspeichers 19 fördert ist in der Darstellung nach Figur 1 nicht gezeigt.

Das Ansaugrohr 6 ist mit einem Luftmassensensor 10 und das Abgasrohr 7 mit einem Lambdasensor 11 versehen. Der Luftmassensensor 10 misst die Luftmasse der dem Ansaugrohr 6 zugeführten Frischluft und erzeugt in Abhängigkeit davon ein Signal LM. Der Lambdasensor 11 misst den Sauerstoffgehalt des Abgases in dem Abgasrohr 7 und erzeugt in Abhängigkeit davon ein Signal Lambda. Die Signale des Luftmassensensors 10 und des Lambdasensors 11 werden dem Steuergerät 16 zugeführt.

In dem Ansaugrohr 6 ist eine Drosselklappe 12 untergebracht, deren Drehstellung mittels eines Signals DK einstellbar ist. Weiterhin kann das Abgasrohr 7 über eine hier nicht dargestellte Abgasrückführungsleitung mit dem Ansaugrohr 6 verbunden sein. Die Steuerung der Abgasrückführung kann beispielsweise über ein vom Steuergerät 16 ansteuerbares, hier ebenfalls nicht dargestelltes, Abgasrückführventil erfolgen.

In einer ersten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im Wesentlichen gleichmäßig/homogen verteilt. Danach wird das Kraftstoff-Luft-Gemisch während der Verdichtungsphase verdichtet, um dann von der Zündkerze 9 entzündet zu werden. Durch die Ausdehnung des entzündeten Kraftstoffs wird der Kolben 2 angetrieben.

In einer zweiten Betriebsart, dem Schichtbetrieb der Brennkraftmaschine 1, wird die Drosselklappe 12 weit geöffnet. Der Kraftstoff wird von dem Einspritzventil 8 während einer durch den Kolben 2 hervorgerufenen Verdichtungsphase in den Brennraum 4 eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird.

Im Schichtbetrieb wie auch im Homogenbetrieb wird durch den angetriebenen Kolben eine Kurbelwelle 14 in eine Drehbewegung versetzt, über die letztendlich die Räder des Kraftfahrzeugs angetrieben werden. Auf der Kurbelwelle 14 ist ein Zahnrad angeordnet, dessen Zähne von einem unmittelbar gegenüber angeordneten Drehzahlsensor 15 abgetastet werden. Der Drehzahlsensor 15 erzeugt ein Signal, aus dem die Drehzahl n der Kurbelwelle 14 ermittelt wird und übermittelt dieses Signal n an das Steuergerät 16.

Die im Schichtbetrieb und im Homogenbetrieb von dem Einspritzventil 8 in den Brennraum eingespritzte Kraftstoffmasse wird von dem Steuergerät 16 insbesondere im Hinblick auf einen geringen Kraftstoffverbrauch und/oder eine geringe Schadstoffentwicklung gesteuert und/oder geregelt. Auch die erfindungsgemäße Bestimmung einer Heißstartsituation sowie die Bestimmung der Einspritzdauer in einer Heißstartsituation erfolgt in dem Steuergerät 16. Zu diesem Zweck ist das Steuergerät 16 mit einem Mikroprozessor versehen, der in einem Speichermedium Programmcode abgespeichert hat, der dazu geeignet ist, die gesamte erfindungsgemäße Steuerung und/oder Regelung der Brennkraftmaschine 1 durchzuführen.

Das Steuergerät 16 ist von Eingangssignalen beaufschlagt, die mittels Sensoren gemessene Betriebsgrößen der Brennkraftmaschine darstellen. Beispielsweise ist das Steuergerät 16 mit dem Luftmassensensor 10, dem Lambdasensor 11, dem Drehzahlsensor 15, dem Drucksensor 20 und dem Temperatursensor 21 verbunden. Des Weiteren ist das Steuergerät 16 mit einem Fahrpedalsensor 17 verbunden, der ein Signal FP erzeugt, das die Stellung eines von einem Fahrer betätigbaren Fahrpedals/Gaspedals und damit das von dem Fahrer angeforderte Moment angibt. Als weiteres, in der Darstellung nach Figur 1 nicht gezeigtes, Eingangssignal wird dem Steuergerät 16 ein Motortemperatursignal zugeführt. Dies kann beispielsweise das Signal eines Kühlwassertemperatursensors, eines Öltemperatursensors oder auch eines an den Motorblock angebrachten Bauteiltemperatursensors sein. Das Steuergerät 16 erzeugt Ausgangssignale, mit denen über Aktoren das Verhalten der Brennkraftmaschine 1 entsprechend der erwünschten Steuerung und/oder Regelung beeinflusst werden kann. Beispielsweise ist das Steuergerät 16 mit dem Einspritzventil 8, der Zündkerze 9 und der Drosselklappe 12 verbunden und erzeugt die zu deren Ansteuerung erforderlichen Signale TI, ZW und DK.

Die in das Steuergerät 16 implementierten erfindungsgemäßen Verfahren werden im Weiteren ausführlicher dargelegt.

Grundsätzlich tritt eine Dampfblasenbildung in Kraftstoffversorgungssystem bei üblichen Kraftstoffen ab Temperaturen oberhalb von 100°C und bei Systemdrücken von ca. 3 bis 4 bar auf. Bei modernen Motoren, die mit einer Hochdruckkraftstoffeinspritzung, beispielsweise einer Benzindirekteinspritzung, versehen sind, steht in der Regel beim Start der Brennkraftmaschine noch kein Hochdruck im Kraftstoffversorgungssystem zur Verfügung. Durch den nicht zur Verfügung stehenden Hochdruck in Startsituationen kann es bisweilen passieren, dass durch die Überhitzung des Kraftstoffes durch die noch heißen Komponenten des Kraftstoffversorgungssystems eine Heißstartsituation vorliegt. In der Regel kann es vorkommen, dass sich nach dem Abstellen der Brennkraftmaschine die Temperatur des Kraftstoffes, der sich im Einspritzsystem und im Kraftstoffversorgungssystem, insbesondere im Common-Rail befindet, noch ca. 10 Minuten lang weiter in der Temperatur erhöht, bis die Temperatur des Kraftstoffes zu sinken beginnt. Durch diese Temperaturüberhöhung nach Abstellen des Kraftfahrzeuges kann es zu einer Dampfblasenbildung im Kraftstoffsystem nach Abstellen des Kraftfahrzeuges kommen, was bei einer Neustartsituation zu einem Heißstart führt.

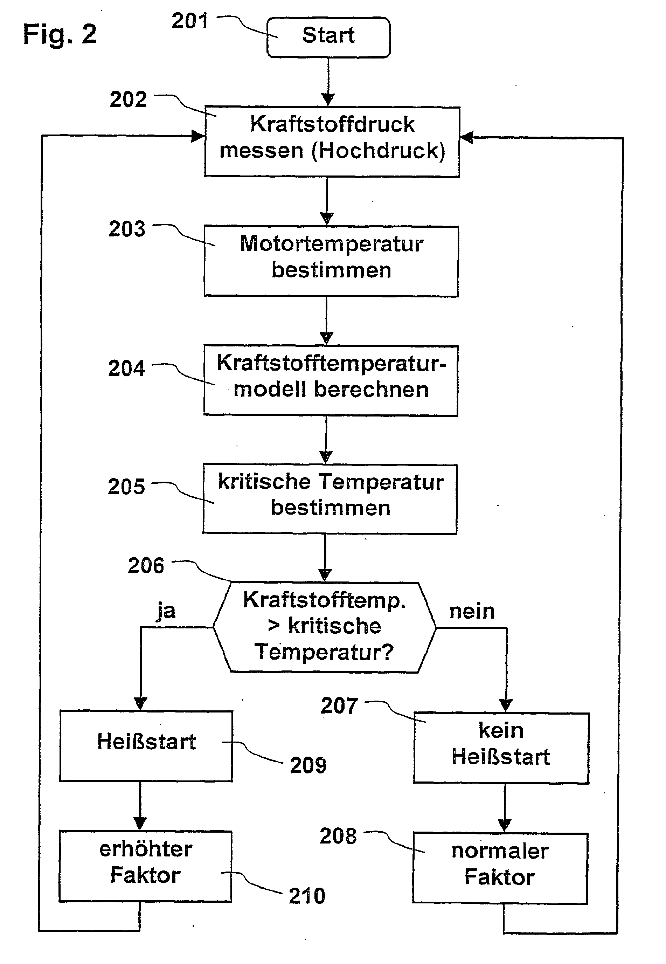

Figur 2 zeigt ein Ausführungsbeispiel des erfindungsgemäßen Verfahrens. In einem Schritt 201 startet das erfindungsgemäße Verfahren. In diesem Schritt können beispielsweise die im Steuergerät erforderlichen Initialisierungen zur Durchführung des erfindungsgemäßen Verfahrens erfolgen. In einem anschliessenden Schritt 202 wird der Kraftstoffdruck im Kraftstoffhochdruckspeicher 19 gemessen. Dies kann beispielsweise mit einem Drucksensor 20 erfolgen. In einem Schritt 202 anschliessenden Schritt 203 wird die Temperatur des Motors bestimmt. Hierzu wird in der Regel die Temperatur eines Fluids im Motor gemessen. Vorzugsweise wird die Kühlmitteltemperatur des Motors als Motortemperatur herangezogen. Alternativ möglich ist aber auch die Verwendung eines speziellen Bauteiltemperatursensors, der im Bereich des Zylinderkopfes angeordnet ist. Im Idealfall, was jedoch in der Praxis aus Kostengründen eher nicht zur Anwendung kommt, kann die Kraftstofftemperatur im Hochdruckspeicher 19 mit einem entsprechenden Temperatursensor 21 unmittelbar gemessen werden.

Nach erfolgter Motortemperaturbestimmung im Schritt 203 wird im Schritt 204 die Kraftstofftemperatur anhand eines Modells berechnet. Im einfachsten Fall kann in diesem Modell davon ausgegangen werden, dass sich die Kraftstofftemperatur von der Motortemperatur um einen konstanten Offset, beispielsweise 5°C, unterscheidet. Hierbei würde die Kraftstofftemperatur der Motortemperatur abzüglich eines Offset-Wertes entsprechen. Alternativ möglich ist auch die Bestimmung der Kraftstofftemperatur anhand eines im Speicher des Steuergerätes abgelegten Kennfelds möglich. Ein solches Kennfeld kann neben der Motortemperatur weitere Parameter, wie beispielsweise die Abstelldauer des Kraftfahrzeuges, die Umgebungstemperatur des Kraftfahrzeuges, spezifische Daten des verwendeten Kühlmittels oder auch kraftstoffspezifische Daten enthalten.

Im an den Schritt 204 anschliessenden Schritt 205 wird entsprechend des gemessenen Kraftstoffdruckes und der zuvor bestimmten Kraftstofftemperatur eine kritische Temperatur bestimmt. Hierbei wird die kritische Temperatur maßgeblich in Abhängigkeit vom Kraftstoffdruck gebildet. Auch hierbei ergeben sich die Möglichkeiten, die kritische Temperatur entsprechend einer vorbestimmten Berechnungsvorschrift oder anhand eines im Speicher des Steuergerätes abgelegten Kennfeldes zu bestimmen.

Im anschliessenden Schritt 206 wird überprüft, ob die bestimmte Kraftstofftemperatur oberhalb der zuvor bestimmten kritischen Temperaturschwelle liegt. Ist dies nicht der Fall, wird vom Schritt 206 zu einem Schritt 207 übergegangen, in dem entschieden wird, dass keine Heißstartsituation vorliegt. Ein eventuell im Steuergerät vorgesehenes Heißstartbit wird in diesem Falle nicht gesetzt. Bei der anschliessenden Bestimmung der Einspritzdauer wird die normale, ohnehin im Steuergerät ablaufende Einspritzzeitberechnung verwendet. Es findet also keine Erhöhung der bestimmten Einspritzzeit um einen sogenannten Heißstartfaktor statt. Im Anschluß kehrt das Verfahren zu Schritt 202 zurück.

Wird im Schritt 206 hingegen festgestellt, dass die bestimmte Kraftstofftemperatur oberhalb der bestimmten kritischen Temperatur liegt, wird zu einem Schritt 209 übergegangen, in dem auf eine Heißstartsituation entschieden wird. In diesem Schritt 209 kann ein beispielsweise im Steuergerät vorhandenes Heißstartbit entsprechend gesetzt werden.

Ist im Schritt 209 auf einen Heißstart entschieden worden, so fährt das Verfahren mit Schritt 210 fort. In diesem Schritt 210 wird in Abhängigkeit davon, in welchem Maße die bestimmte Kraftstofftemperatur die kritische Temperatur überschritten hat, ein Erhöhungsfaktor für die im Steuergerät bestimmte Einspritzzeit unter Normalbedingungen bestimmt. Mit anderen Worten: In einer Heißstartsituation wird die Einspritzdauer um einen sogenannten Heißstartfaktor erhöht, wobei der Heißstartfaktor maßgeblich von der bestimmten Kraftstofftemperatur und der bestimmten kritischen Temperatur und somit indirekt maßgeblich von der Motortemperatur abhängig ist.

Wenn in den vorgenannten Ausführungen von Kraftstofftemperatur die Rede war, so wird vorausgesetzt, dass damit die Kraftstofftemperatur in einem Hochdruckspeicher, beispielsweise ein Common-Rail, eines Kraftstoffversorgungssystems gemeint ist. Die Kraftstofftemperatur kann hierbei entweder direkt über einen Temperatursensor 21 oder über ein Kraftstofftemperaturmodell 204 bestimmt werden.

## Patentansprüche

1. Verfahren zur Bestimmung einer eine Einspritzmenge charakterisierenden Größe bei einer Brennkraftmaschine eines Kraftfahrzeuges in einer Heißstartsituation, wobei Kraftstoff aus einem Hochdruckbereich des Kraftstoffversorgungssystems direkt in wenigstens einen Brennraum eingespritzt wird, wobei die die Einspritzmenge charakterisierende Größe in der Heißstartsituation korrigiert wird,
**dadurch gekennzeichnet, dass** die die Einspritzmenge charakterisierende Größe wenigstens in Abhängigkeit von einer eine Temperatur des Kraftstoffs repräsentierenden Größe korrigiert wird,
und dass die Heißstartsituation wenigstens anhand der die Temperatur des Kraftstoffs repräsentierenden Größe und anhand eines Kraftstoffdruckes bestimmt wird.

2. Verfahren nach Anspruch 1, **dadurch gekennzeichnet, dass** die die Einspritzmenge charakterisierende Größe eine Einspritzdauer ist.

3. Verfahren nach Anspruch 1, **dadurch gekennzeichnet, dass** die die Temperatur des Kraftstoffs repräsentierende Größe eine Motor- oder Kühlmitteltemperatur ist.

4. Verfahren nach Anspruch 1, **dadurch gekennzeichnet, dass** der Kraftstoffdruck in dem Hochdruckbereich des Kraftstoffversorgungssystems bestimmt wird.

5. Verfahren nach Anspruch 4, **dadurch gekennzeichnet, dass** eine Heißstartsituation erkannt wird, wenn eine Motortemperatur oder eine Kühlmitteltemperatur einen applizierbaren Temperaturschwellenwert überschreitet und der Kraftstoffdruck im Hochdruckbereich einen applizierbaren Druckschwellenwert unterschreitet.

6. Verfahren nach Anspruch 4, **dadurch gekennzeichnet, dass** eine kritische Temperatur anhand des Kraftstoffdrucks in dem Hochdruckbereich des Kraftstoffversorgungssystems bestimmt und/oder aus einem applizierbaren Kennfeld entnommen wird.

7. Steuergerät für eine Brennkraftmaschine, insbesondere eines Kraftfahrzeugs, **dadurch gekennzeichnet, dass** Mittel zur Durchführung der Schritte des Verfahrens nach wenigstens einem der Ansprüche von 1 bis 6 vorhanden sind.

8. Computerprogramm mit Programmcode-Mitteln, um alle Schritte von jedem beliebigen der Ansprüche 1 bis 6 durchzuführen, wenn das Programm auf einem Computer, insbesondere einem Steuergerät für eine Brennkraftmaschine, ausgeführt wird.

9. Computerprogrammprodukt mit Programmcode-Mitteln, die auf einem computerlesbaren Datenträger gespeichert sind, um das Verfahren nach jedem beliebigen der Ansprüche 1 bis 6 durchzuführen, wenn das Programmprodukt auf einem Computer, insbesondere einem Steuergerät für eine Brennkraftmaschine, ausgeführt wird.

10. Vorrichtung zur Bestimmung einer eine Einspritzmenge charakterisierenden Größe bei einer Brennkraftmaschine eines Kraftfahrzeuges in einer Heißstartsituation, wobei Kraftstoff aus einem Hochdruckbereich des Kraftstoffversorgungssystems direkt in wenigstens einen Brennraum eingespritzt wird, wobei die die Einspritzmenge charakterisierende Größe in der Heißstartsituation korrigiert wird, **dadurch gekennzeichnet, dass** Mittel vorhanden sind, mittels derer die die Einspritzmenge charakterisierende Größe wenigstens in Abhängigkeit von einer eine Temperatur des Kraftstoffs repräsentierenden Größe korrigierbar ist, und dass Mittel vorhanden sind, mittels derer eine Heißstartsituation wenigstens anhand einer eine Temperatur des Kraftstoffs repräsentierenden Größe und anhand eines Kraftstoffdruckes bestimmbar ist.

## Claims

1. Method for determining a variable which characterizes an injection quantity in an internal combustion engine of a motor vehicle in a hot-start situation, with fuel from a high-pressure region of the fuel supply system being injected directly into at least one combustion chamber, with the variable which characterizes the injection quantity being corrected in the hot-start situation,
**characterized in that** the variable which characterizes the injection quantity is corrected at least as a function of a variable which represents a temperature of the fuel,
and **in that** the hot-start situation is determined at least on the basis of the variable which represents the temperature of the fuel and on the basis of a fuel pressure.

2. Method according to Claim 1, **characterized in that** the variable which characterizes the injection quantity is an injection duration.

3. Method according to Claim 1, **characterized in that** the variable which represents the temperature of the fuel is an engine or coolant temperature.

4. Method according to Claim 1, **characterized in that** the fuel pressure in the high-pressure region of the fuel supply system is determined.

5. Method according to Claim 4, **characterized in that** a hot-start situation is detected when an engine temperature or a coolant temperature exceeds an applicable temperature threshold value and the fuel pressure in the high-pressure region falls below an applicable pressure threshold value.

6. Method according to Claim 4, **characterized in that** a critical temperature is determined on the basis of the fuel pressure in the high-pressure region of the fuel supply system and/or is read out from an applicable characteristic diagram.

7. Control unit for an internal combustion engine, in particular of a motor vehicle, **characterized in that** means for carrying out the steps of the method according to at least one of Claims 1 to 6 are provided.

8. Computer program with program code means in order to carry out all of the steps of any one of Claims 1 to 6 when the program is executed on a computer, in particular a control unit for an internal combustion engine.

9. Computer program product with program code means which are stored on a computer-readable data carrier in order to carry out all of the steps of any one of Claims 1 to 6 when the program product is executed on a computer, in particular a control unit for an internal combustion engine.

10. Device for determining a variable which characterizes an injection quantity in an internal combustion engine of a motor vehicle in a hot-start situation, with fuel from a high-pressure region of the fuel supply system being injected directly into at least one combustion chamber, with the variable which characterizes the injection quantity being corrected in the hot-start situation,
**characterized in that** means are provided, by means of which the variable which characterizes the injection quantity can be corrected at least as a function of a variable which represents a temperature of the fuel,
and **in that** means are provided, by means of which a hot-start situation can be determined at least on the basis of a variable which represents a temperature of the fuel and on the basis of a fuel pressure.

## Revendications

1. Procédé pour déterminer une grandeur caractérisant une dose à injecter dans un moteur à combustion interne de véhicule automobile en état de démarrage à chaud, selon lequel
on injecte directement le carburant dans au moins une chambre de combustion à partir d'une zone haute pression du système d'alimentation en carburant,
la grandeur caractérisant la dose à injecter étant corrigée pour l'état de démarrage à chaud,
**caractérisé en ce que**
la grandeur caractérisant la dose à injecter est corrigée au moins en fonction d'une grandeur représentant la température du carburant,
et on détermine l'état de démarrage à chaud au moins à partir de la grandeur représentant la température du carburant et à l'aide de la pression du carburant.

2. Procédé selon la revendication 1,
**caractérisé en ce que**
la grandeur caractérisant la dose à injecter est une durée d'injection.

3. Procédé selon la revendication 1,
**caractérisé en ce que**
la grandeur représentant la température du carburant est la température du moteur ou de l'agent de refroidissement.

4. Procédé selon la revendication 1,
**caractérisé en ce que**
la pression du carburant se définit dans la plage de haute pression du système d'alimentation en carburant.

5. Procédé selon la revendication 4,
**caractérisé en ce qu'**
on détecte un état de démarrage à froid si la température du moteur ou la température de l'agent de refroidissement dépasse un seuil de température obtenu par application et si la pression du carburant dans la zone haute pression passe en dessous d'un seuil de pression obtenu par application.

6. Procédé selon la revendication 4,
**caractérisé en ce qu'**
on détermine une température critique avec la pression du carburant dans la zone haute pression du système d'alimentation en carburant et/ou on prélève cette température d'un champ de caractéristiques obtenu par application.

7. Appareil de commande d'un moteur à combustion interne, notamment d'un véhicule automobile,
**caractérisé par**
des moyens pur mettre en oeuvre les étapes du procédé selon au moins l'une des revendications 1 à 6.

8. Programme d'ordinateur comportant des moyens de code de programme pour exécuter toutes les étapes de l'une quelconque des revendications 1 à 6 lorsque le programme est exécuté sur un ordinateur, notamment un appareil de commande d'un moteur à combustion interne.

9. Produit programme d'ordinateur avec des moyens de code de programme enregistrés sur un support de données que peut lire un ordinateur pour exécuter le procédé selon l'une quelconque des revendications 1 à 6 lorsque le produit programme est exécuté dans un ordinateur, notamment d'un appareil de commande d'un moteur à combustion interne.

10. Dispositif pour déterminer une grandeur caractérisant une dose à injecter d'un moteur à combustion interne de véhicule automobile en état de démarrage à chaud selon lequel
le carburant est injecté directement dans au moins une chambre de combustion à partir de la zone haute pression du système d'alimentation en carburant,
la grandeur caractérisant la dose à injecter étant corrigée pour l'état de démarrage à chaud,
**caractérisé par**
des moyens pour corriger la grandeur caractérisant la dose à injecter au moins en fonction d'une grandeur représentant la température du carburant, et
des moyens pour déterminer une grandeur représentant au moins une température du carburant pour l'état de démarrage à chaud pour en déduire la pression du carburant.
